Europäisches Patentamt

European Patent Office

Office européen des brevets

(11) Numéro de publication: **0 344 065**
**A1**

## (12) DEMANDE DE BREVET EUROPEEN

(21) Numéro de dépôt: 89401414.1

(22) Date de dépôt: 24.05.89

(51) Int. Cl.⁴: **G 05 D 23/24**
**H 03 K 17/00**

(30) Priorité: 24.05.88 CA 567546

(43) Date de publication de la demande:
29.11.89 Bulletin 89/48

(84) Etats contractants désignés:
AT BE CH DE ES FR GB IT LI NL SE

(71) Demandeur: **Bensoussan, David**
**5170 Hingston**
**Montréal Québec H3X 3R2 (CA)**

**Tardio, Don**
**6631 Paul-Pau**
**Montréal Québec H1K 4R7 (CA)**

(72) Inventeur: **Bensoussan, David**
**5170 Hingston**
**Montréal Québec H3X 3R2 (CA)**

**Tardio, Don**
**6631 Paul-Pau**
**Montréal Québec H1K 4R7 (CA)**

(74) Mandataire: **Rodhain, Claude et al**
**Cabinet Claude Rodhain 30, rue la Boétie**
**F-75008 Paris (FR)**

(54) Régulateur électronique alimenté pendant les périodes inactives de commutation du secteur.

(57) Un régulateur électronique comporte deux bornes d'entrée (1, 1') entre lesquelles le secteur (6) et une charge électrique (5) sont reliés en série. Une unité de traitement (2) génère un signal de commande d'application et de puissance électrique à la charge qui ferme un commutateur électronique (3) également relié entre les deux bornes d'entrée (1, 1') pour interconnecter le secteur (6) et la charge (5) en série dans une boucle fermée. Une tension électrique d'alimentation du régulateur est fournie par une seconde source (9, 10) dérivée des deux bornes d'entrée (1, 1'), donc du secteur (6) à travers la charge lorsque le commutateur (3) est ouvert. Un circuit électronique (8) ouvre, en présence du signal de commande le commutateur (3) normalement fermé par ce signal afin de maintenir à un niveau adéquat la tension d'alimentation du régulateur. L'ouverture du commutateur (3) se produit temporairement et de façon répétée, soit périodiquement, soit lorsque la tension d'alimentation du régulateur passe par dessous d'une valeur de seuil prédéterminé.

FIG. 2

EP 0 344 065 A1

## Description

**Régulateur électronique alimenté pendant les périodes inactives de commutation du secteur.**

La présente invention se rapporte à un système de commande qui fonctionne grâce à un système d'alimentation dérivé d'une source de tension commutée à une charge. Elle permet de maintenir un régulateur en fonctionnement sans avoir recours à une ligne supplémentaire ou à des batteries. Elle trouve un usage particulier dans les thermostats électroniques branchés à des charges électriques, permettant le branchement d'un commutateur électronique et d'un régulateur de température sur deux fils seulement.

Les thermostats électroniques actuellement sur le marché font usage de commutateurs électroniques tels les thyristors ou les triacs afin de connecter ou de déconnecter le secteur à un élément chauffant. De tels systèmes nécessitent trois fils connectés aux thermostats afin d'être opérationnels. Deux fils apportent la tension du secteur au thermostat, le premier étant branché à une extrémité d'un élément chauffant tandis que le second côté de l'élément chauffant est branché à l'autre extrémité du régulateur électronique.

Selon l'invention, il suffit de deux fils pour connecter le thermostat électronique à un élément chauffant. Un système de régulation permet de créer une alimentation stabilisée qui va être utilisée pour activer le régulateur électronique de façon permanente. L'alimentation stabilisée est régulée pendant les périodes durant lesquelles l'élément chauffant ne chauffe pas. Toutefois, si l'élément chauffant doit chauffer pour une longue durée, un dispositif électronique permet de déconnecter le secteur de l'élément chauffant lorsque nécessaire afin de maintenir l'alimentation stabilisée à un niveau satisfaisant.

La présente invention permet d'éviter d'utiliser une batterie comme c'est le cas par exemple dans le brevet canadien n° 1 035 448 (LAMBERT) délivré le 25 juillet 1978, ou encore une batterie de secours tel que proposé dans le brevet français n° 2 491 692 (KABAT) publié le 9 avril 1982. Elle évite dans de nombreux cas à avoir à passer un troisième fil dans les murs là où la construction des systèmes a prévu seulement deux fils, ou encore à avoir à moduler des impulsions de contrôle sur les fils d'alimentation du thermostat, ce qui produit de nombreuses transitoires sur la ligne. Cette invention diffère des montages en pont suggérés dans le brevet canadien n° 1 217 544 (CROSS et AI) délivré le 3 février 1987 et dans lesquels le thermostat est connecté à même le radiateur. Elle peut également s'appliquer à des systèmes de chauffage ou de refroidissement tels que décrits dans le brevet canadien n° 797 079 (RAY) en date du 22 octobre 1968.

Plus particulièrement, la présente invention concerne un régulateur électronique destiné à contrôler l'application de puissance électrique issue d'une première source d'alimentation à une charge électrique, comportant :
deux bornes d'entrée entre lesquelles la première source et la charge sont destinées à être reliées en série ;
un régulateur électronique connecté entre les deux bornes d'entrée ;
des moyens pour générer un signal de commande d'application de puissance à la charge électrique ;
des moyens pour fermer le commutateur électronique en réponse audit signal de commande, afin d'interconnecter les deux bornes d'entrée à travers ledit commutateur, de sorte que ladite première source est reliée en série avec la charge dans une boucle fermée et alimente ainsi ladite charge en puissance électrique ;
une seconde source pour produire une tension électrique d'alimentation du régulateur électronique, ladite seconde source étant dérivée à partir des deux bornes d'entrée et donc à partir de la première source à travers ladite charge électrique lorsque le commutateur est ouvert ; et
des moyens pour ouvrir temporairement et de façon répétée, ledit commutateur en présence du signal de commande qui cause normalement la fermeture, pour ainsi maintenir la tension d'alimentation produite par la seconde source, dérivée de la première lorsque le commutateur est ouvert, à un niveau adéquat pour l'alimentation du régulateur électronique.

De préférence, des moyens sont prévus pour assurer une commutation seulement lors du passage de l'alimentation du secteur par le niveau zéro afin d'éviter des transitoires sur la ligne.

Relativement aux dessins qui illustrent une réalisation préférée de l'invention :
la figure 1 schématise le principe de la commutation de puissance d'une charge donnée par un régulateur électronique,
la figure 2 représente un schéma fonctionnel du régulateur électronique,
la figure 3 détaille les connexions électriques du schéma fonctionnel de la figure 2 en y incorporant un détecteur de zéro, un amplificateur du signal de gâchette et une faible impédance ; et
la figure 4 représente un schéma électronique complet pouvant assurer un fonctionnement adéquat du thermostat.

L'invention sera mieux comprise à l'aide de la description qui suit, en référence aux schémas fonctionnels représentant à titre d'exemple non limitatif, une forme de réalisation d'un système de contrôle de température.

L'invention comprend des éléments fonctionnels suivants.

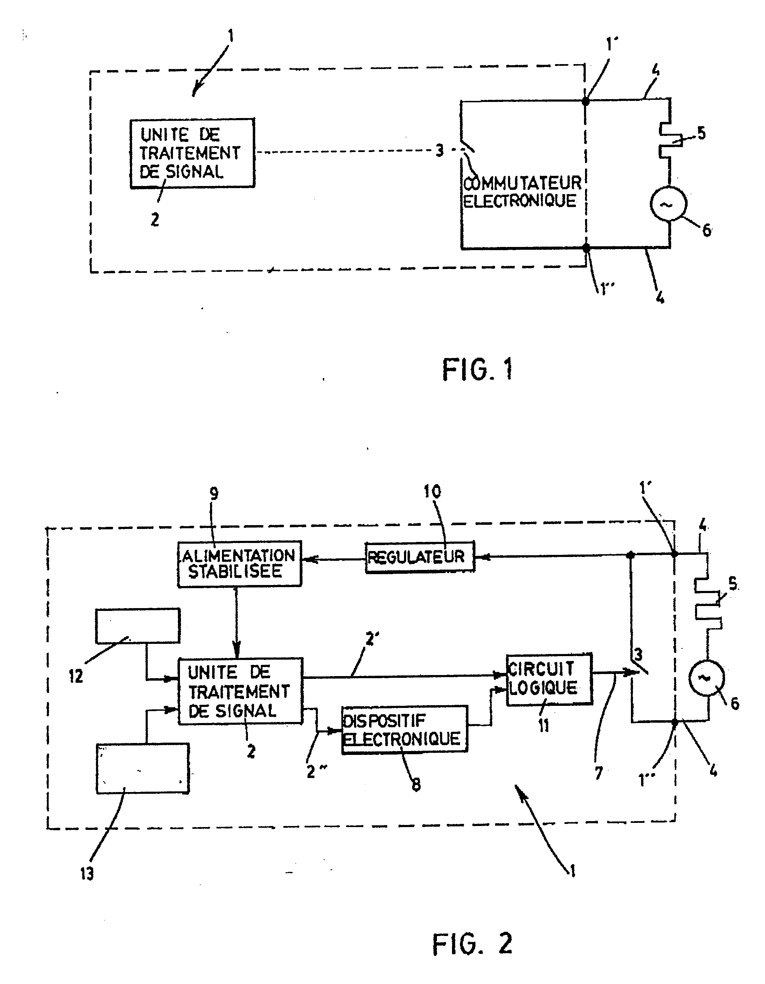

La figure 1 représente un régulateur0électronique 1 comprenant une unité de traitement de signal 2 qui contrôle la commutation d'un commutateur électronique 3. Ce dernier constitue soit un circuit ouvert, soit un circuit fermé avec les deux fils de connexion 4 qui sont branchés en série avec un élément chauffant 5 et le secteur 6 entre des bornes d'entrée 1' et 1'' du régulateur, et peuvent être de longueur adéquate pour permettre un contrôle à distance de l'application de puissance à l'élément 5. De la sorte, l'élément chauffant 5 est alimenté électriquement lorsque le commutateur électronique 3 est dans un état fermé et le secteur 6 est déconnecté de l'élément chauffant 5 lorsque le commutateur électronique 3 est dans l'état ouvert.

Dans la figure 2, la gâchette 7 du commutateur électronique 3 est activée lorsque, d'une part, l'unité de traitement de signal 2 émet un signal sur une sortie 2' indiquant qu'il y a lieu de maintenir l'élément chauffant 5 branché au secteur 6 et lorsque, d'autre part, un dispositif électronique 8, relié à la sortie 2'' de l'unité de traitement 2, ne requiert pas d'interrompre le chauffage de l'élément chauffant 5 afin de pouvoir maintenir la tension d'une alimentation stabilisée 9 à un niveau acceptable au moyen d'un régulateur de tension 10. Les conditions d'activation de la gâchette 7 du commutateur 3 peuvent être réalisées au moyen d'un circuit logique 11 de type ET illustré à la figure 2 et relié à la sortie 2' de l'unité de traitement 2 et à celle du dispositif 8.

L'unité de traitement de signal 2 qui peut être analogique ou numérique fournit des signaux de commande sur sa sortie 2' à la gâchette 7 du commutateur électronique 3 selon la différence existant entre une valeur de température contrôlée mesurée par un détecteur de température 12 et la valeur de température désirée telle que déterminée dans une unité de commande de température 13.

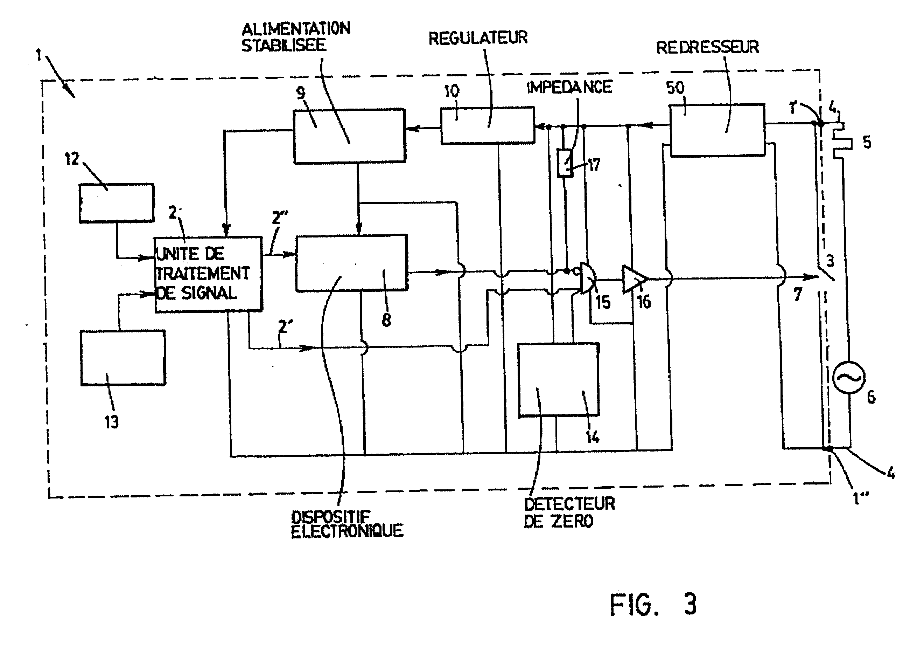

Nous référant à la figure 3, la commutation par le commutateur électronique 3 peut être effectuée aux moments du passage à zéro de la tension du secteur 6 au moyen d'un détecteur de zéro 14 lequel émet des impulsions aux moments du passage à zéro de la tension du secteur 6 à un circuit logique ET 15 afin d'assurer que les interruptions du secteur s'effectuent à ces mêmes moments afin d'éviter la création de transitoires sur le secteur. Un amplificateur de signal 16 permet d'amplifier le signal de commande de la gâchette du commutateur électronique 3.

Le dispositif électronique 8 peut être un détecteur de seuil de tension, lequel déclenche un signal d'interruption du chauffage de l'élément chauffant 5 lorsque la tension de l'alimentation stabilisée délivrée sur la sortie 2'' de l'unité 2 tombe au-dessous d'une valeur seuil. Il peut être également un générateur d'impulsions lequel assure la déconnexion de la tension du secteur 6 de l'élément chauffant 5 de façon périodique quand bien même l'élément chauffant 5 nécessiterait un échauffement continu. Cette impulsion aurait un rapport de cycle lequel assurerait le maintien de la régulation de l'alimentation stabilisée 9 durant une constante de temps du système d'alimentation stabilisée 9. Un tel rapport de cycle serait extrêmement faible si l'unité de traitement de signal 2 est un microprocesseur de type CMOS. Par ailleurs, l'insertion de condensateurs de capacité élevée et de faibles dimensions dans l'alimentation stabilisée 9 peut garantir la faisabilité et l'efficacité d'une telle alimentation stabilisée.

Afin d'assurer une mise sous tension du système sans problème, le dispositif électronique 8 est pourvu d'une haute impédance de sortie laquelle est branchée d'une part à une entrée du circuit logique ET 15 et d'autre part, à une faible impédance 17. De la sorte, il y aura lieu de pourvoir à une bonne valeur d'alimentation stabilisée 9 avant de pouvoir agir sur le circuit logique ET 15 ; en effet, au moment de la mise en marche du régulateur, la faible impédance 17 vient assumer un "1" logique à l'entrée invergence du circuit logique ET 15, assurant ainsi la neutralisation du courant de gâchette 7. Quand l'alimentation stabilisée 9 atteint sa valeur degré, l'impédance du dispositif électronique 8 présente une très faible impédance de sortie, de façon à assurer un zéro logique à l'entrée inverseuse du circuit logique ET 15.

Il peut être constaté très facilement sur la figure 3 que l'alimentation stabilisée du régulateur électronique 1 est dérivée des bornes 1' et 1'' du régulateur lorsque le commutateur 3 est ouvert, c'est à dire du secteur 6 relié à travers l'élément chauffant 5 à un redresseur 50 lui-même relié en entrée du régulateur 10.

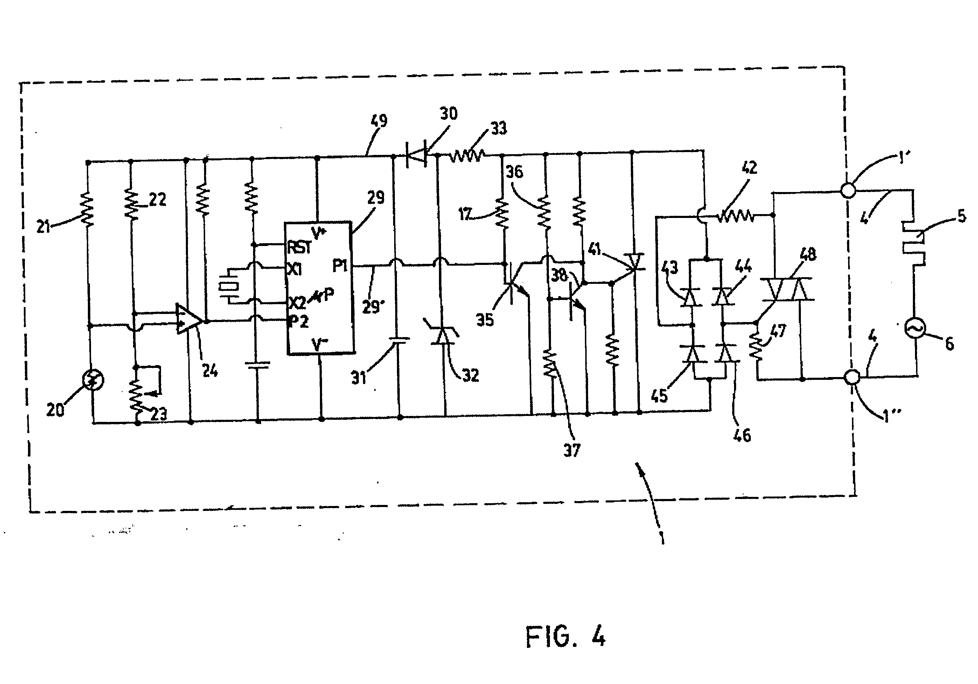

On va décrire ci-après en se référant à la figure 4, un exemple de réalisation du circuit électronique.

Un détecteur de température 20 fournit une lecture électrique proportionnelle à la température existante dans une pièce tandis que le curseur de référence du potentiomètre 23 fournit une tension proportionnelle à la température désirée dans la même pièce. Le signe de la différence entre ces deux tensions telle que déterminée par le comparateur 24 est transmise à une unité de traitement numérique tel un microprocesseur 29 lequel va fournir des tensions activant le relais de puissance connecté à l'élément chauffant 5, encore disposé dans la même pièce.

Les transistors 35 et 38 agissent sur la gâchette du thyristor 41. Ce dernier agit comme amplificateur de courant pour les impulsions de gâchette transmises à un triac 48 lorsque les deux transistors 35 et 38 sont simultanément à l'état bloqué. Ainsi, lorsque le transistor 38 conduit, grâce au diviseur de tension constitué par les résistances 36 et 37, sa tension collecteur-émetteur est très basse et le thyristor 41 n'est pas activé. Lorsque le transistor 38 est à l'état bloqué, sa tension collecteur-émetteur est élevée et le thyristor 41 peut conduire.

Le transistor 35 est activé par le signal de sortie 29' de l'unité de traitement numérique 29. Lorsque cette sortie 29' est nulle, elle présente une haute impédance à la base du transistor 35. Il s'ensuit que le transistor 35 conduit grâce à la résistance 34, ce qui a pour effet d'abaisser la tension collecteur-émetteur du transistor 35, empêchant ainsi le thyristor 41 de conduire. Par contre, lorsque l'unité de traitement numérique fournit une tension de sortie non nulle, elle présente une faible impédance, ce qui a pour effet de porter la tension base-émetteur du transistor 35 en dessous de la valeur de conduction. Le transistor 35 passe alors en coupure ce qui permet l'activation du thyristor 41.

Les moments de conduction du transistor 38 sont déterminés par le redresseur d'onde formé par le pont de diodes 43 à 46 ; lorsque le triac 48 n'est pas activé, les valeurs de tension redressées impliquent, lors des passages à zéro, une tension faible à la sortie du diviseur de tension constitué par les résistances 36 et 37, ce qui porte le transistor 38 à la coupure. De la sorte, le thyristor 41 ne peut conduire que lorsque la tension redressée est suffisamment faible, i.e. Lors des passages à zéro de cette tension.

Le microprocesseur de la figure 4 peut être programmé pour commander par sa sortie 29 la conduction du transistor 35 selon le niveau de la tension d'alimentation stabilisée en 49 ou encore selon le rapport cyclique précité. Le transistor 38 ne permet la mise en conduction du thyristor 41 que lors des passages à zéro de la tension du secteur 6. Lors du blocage simultané des transistors 35 et 38, le thyristor 41 est mis en conduction de sorte que le secteur 6 peut transmettre une impulsion de gâchette au triac 48 à travers l'élément 5, une résistance 42, la diode 43, le thyristor 41, la diode 46 et une résistance 47.

Sur la figure 4, le pont de diodes 43 à 46 constitue le redresseur 50 (figure 3) ; une résistance 33, une diode Zener 32, une diode 30 et un condensateur 31 constituent le régulateur de tension 10 qui fournit la tension d'alimentation stabilisée 9 (figures 2 et 3) en 49 ; une résistance 21 forme avec le détecteur de température 20 un diviseur de la tension stabilisée en 49, dont le point milieu alimente l'entrée non inverseuse d'un comparateur 24 ; et la résistance 22 forme avec un potentiomètre 23 un diviseur de la tension stabilisée en 49, dont le point milieu alimente l'entrée inverseuse du comparateur 24.

Plusieurs variations peuvent être apportées à ce circuit. Les tensions de référence et du détecteur peuvent passer par des convertisseurs analogiques-numériques, le microprocesseur peut être remplacé par un circuit intégré, le redresseur peut être un redresseur demi-onde ou onde-entière, l'activation du thyristor 41 peut être déclenchée par un circuit de logique négative, etc...

Bien que l'exemple d'un thermostat électronique ait été illustré, la présente invention peut être appliquée à de nombreux systèmes dissipateurs de puissance commandés à distance, tels qu'un système d'air climatisé, un système de chauffage et air climatisé, un système de ventilation et d'humidification, ou un moteur. De la sorte, il sera possible de brancher ces types de systèmes au moyen de deux fils seulement, ce qui permettra de créer une alimentation stabilisée laquelle permettra le fonctionnement d'unités électroniques variées telles les microprocesseurs, les circuits de communication audio et autres, les affichages photoluminescents, etc. Un grand nombre d'application pourraient être réalisées et permettre une plus grande flexibilité opérationnelle via l'affichage d'instructions, la mise en mémoire de données, etc. Ainsi, le régulateur électronique pourra être relié à un système de communication à l'aide de deux fils seulement, et éventuellement faire partie intégrante d'un tel système de communication.

L'invention peut également s'appliquer à des systèmes de dissipation de puissance dont l'on modifierait l'une des caractéristiques - amplitude, phase ou fréquence - de façon à diminuer la dissipation de puissance moyenne et permettre la recharge d'une alimentation régulée dérivée à même la puissance électrique alimentant le système de dissipation de puissance.

Bien que la présente invention a été décrite ci-dessus à l'aide d'une forme préférée de réalisation, il doit être mentionné que toute modification à cette forme de réalisation peut être effectuée, à condition de respecter l'étendue des revendications ci-jointes, sans changer ni altérer la nature de la présente invention.

## Revendications

1 - Régulateur électronique pour commander l'application de puissance électrique issue d'une première source d'alimentation (6) à une charge électrique (5) comportant :

deux bornes d'entrée (1, 1') entre lesquelles la première source (6) et la charge (5) sont destinées à être reliées en série ;

un commutateur électronique (3, 48) connecté entre les deux bornes d'entrée ;

des moyens pour générer un signal de commande d'application de puissance à la charge électrique ;

des moyens pour fermer le commutateur électronique (3, 48) en réponse audit signal de commande afin d'interconnecter les deux bornes d'entrée à travers ledit commutateur, de sorte que ladite première source est reliée en série avec la charge dans une boucle fermée et alimente ainsi ladite charge en puissance électrique ;

une seconde source (9, 10, 30-33, 43-46, 50) pour produire une tension électrique d'alimentation du régulateur électronique, ladite seconde source étant dérivée à partir des deux bornes d'entrée et donc à partir de la première source à travers ladite charge électrique lorsque le commutateur est ouvert ; et

des moyens (8, 11, 14-17, 34-38, 41-47) pour ouvrir temporairement et de façon répétée ledit commutateur en présence du signal de commande qui cause normalement la fermeture de ce commutateur par lesdits moyens de fermeture, pour ainsi maintenir la tension d'alimentation produite par la seconde source, dérivée de la première lorsque le commutateur est ouvert, à un niveau adéquat par l'alimentation du contrôleur électronique.

2 - Régulateur électronique selon la revendication 1, caractérisé en ce que lesdits moyens pour générer un signal de commande comportent :

une unité de commande (23) pour produire un signal de référence représentatif d'une valeur désirée pour une grandeur physique mesurable ;

un détecteur (20) pour mesurer ladite grandeur physique et pour produire un signal de mesure représentatif de la grandeur mesurée, et

une unité de traitement de signal (2, 24, 29) pour générer ledit signal de commande d'application de puissance à la charge en fonction d'une différence entre les signaux générés par l'unité de commande de par ledit détecteur.

3 - Régulateur électronique selon la revendication 2, caractérisé en ce que ladite charge électrique est une impédance chauffante et ladite grandeur physique est une température.

4 - Régulateur électronique selon la revendication 3, caractérisé en ce qu'il est constitué par un thermostat.

5 - Régulateur électronique selon la revendication 1, caractérisé en ce que la première source d'alimentation fournit une tension alternative, et en ce que les moyens d'ouverture et de fermeture comportent des moyens (14-17) pour effectuer toute fermeture et toute ouverture du commutateur lors d'un passage à zéro de ladite tension alternative.

6 - Régulateur électronique selon la revendication 1 ou 5, caractérisé en ce que les moyens d'ouverture comportent des moyens pour ouvrir le commutateur de façon périodique.

7 - Régulateur électronique selon la revendication 1, caractérisé en ce qu'il est connecté au moyen de deux fils seulement à la première source d'alimentation (6) et à la charge électrique (5) reliées en série.

8 - Contrôleur électronique selon la revendication 7, caractérisé en ce que lesdits deux fils ont une longueur adéquate pour permettre une commande à distance de l'application de puissance à la charge électrique (5).

9 - Régulateur électronique selon la revendication 2 ou 3, caractérisé en ce qu'il comporte un circuit de déclenchement dudit commutateur, en ce que l'unité de traitement comporte une sortie sur laquelle est délivré ledit signal de commande alimentant une entrée du circuit de déclenchement, et en ce qu'un faible impédance (17) est montée à la sortie de l'unité de traitement et placée en parallèle audit circuit de déclenchement.

10 - Régulateur électronique selon la revendication 1, caractérisé en ce que les moyens d'ouverture comprennent des moyens pour produire un signal périodique de commande d'ouverture transmis au commutateur électronique.

11 - Régulateur électronique selon la revendication 1 ou 5, caractérisé en ce que les moyens d'ouverture comprennent un détecteur de seuil pour détecter le passage de la tension d'alimentation de la seconde source en dessous d'un seuil de tension prédéterminé et des moyens pour ouvrir le commutateur en réponse à la détection de ce passage de tension en dessous dudit seuil.

12 - Régulateur électronique selon la revendication 1, caractérisé en ce que ladite charge électrique (5) est un système d'air climatisé.

13 - Régulateur électronique selon la revendication 1, caractérisé en ce que ladite charge électrique (5) est un système de chauffage et air climatisé.

14 - Régulateur électronique selon la revendication 1, caractérisé en ce que ladite charge électrique (5) est un système de ventilation et d'humidification.

15 - Régulateur électronique selon la revendication 1, caractérisé en ce qu'il est connecté au moyen de deux fils seulement à un système de communication.

16 - Régulateur électronique selon la revendication 1, caractérisé en ce qu'il fait partie d'un système de communication.

17 - Régulateur électronique selon la revendication 1, dans lequel un des paramètres électriques de la puissance électrique issue de la première source d'alimentation à la charge électrique est modifié de façon à permettre la production de la seconde source d'alimentation dérivée à partir de la première source.

18 - Régulateur électronique selon la revendication 17, dans lequel ledit paramètre électrique de la puissance électrique issue de la première source d'alimentation est la phase de celle-ci.

FIG. 1

FIG. 2

FIG. 3

EP 0 344 065 A1

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | US-A-4328528 (A. KOMPELIEN)<br>* abrégé *<br>* colonne 5, ligne 29 - ligne 66 * | 1-8,<br>10-16 | G05D23/24<br>H03K17/00 |
| Y | --- | 17 | |
| Y | US-A-3974426 (R. GINGRAS)<br>* colonne 4, ligne 48 - colonne 5, ligne 13;<br>figures 1, 2 *<br>------ | 17 | |

**DOMAINES TECHNIQUES RECHERCHES (Int. Cl.4 )**

G05D

Le présent rapport a été établi pour toutes les revendications

| Lieu de la recherche | Date d'achèvement de la recherche | Examinateur |
|---|---|---|
| LA HAYE | 16 AOUT 1989 | HELOT H. V. |